# EUROPEAN PATENT APPLICATION

(11) **EP 4 475 244 A2**
(43) Date of publication of application: **11.12.2024**
(21) Application number: 24175065.2
(22) Date of filing: 09.05.2024
(51) Int. Cl.: H01M 10/04, H01M 10/0587, H01M 50/107, H01M 50/152, H01M 50/167, H01M 50/179, H01M 50/184, H01M 50/528, H01M 50/559, H01M 10/0525

(54) **CYLINDRICAL SECONDARY BATTERY**

(30) Priority: 09.06.2023 KR 20230074064
(71) Applicant: Samsung SDI Co., Ltd., Yongin-si, Gyeonggi-do 17084 (KR)
(72) Inventor: KO, Sung Gwi, 17084 Yongin-si (KR); PARK, Gun Gue, 17084 Yongin-si (KR); YU, Gwan Hyeon, 17084 Yongin-si (KR); JUN, Woo Tae, 17084 Yongin-si (KR); YOO, Yoon Sun, 17084 Yongin-si (KR); KIM, Myung Seob, 17084 Yongin-si (KR); JUNG, Hyun Ki, 17084 Yongin-si (KR)
(74) Representative: Marks & Clerk LLP

(57) **Abstract**

A cylindrical secondary battery includes: an electrode assembly; a cylindrical can accommodating the electrode assembly and having a terminal hole (110a) at a first end; and a terminal portion coupled to the first end of the can and electrically connected to the electrode assembly, and the can further includes a coupling groove (112) and a coupling protrusion (114) adjacent to the terminal hole on a portion through which the terminal hole passes. In the cylindrical secondary battery according to embodiments of the present disclosure, a sealing force of the cylindrical secondary battery may be increased by providing a groove and a protrusion in the can that is a region to which a rivet terminal is coupled.

## Description

### BACKGROUND

### 1. Field

Aspects of embodiments of the present disclosure relate to a cylindrical secondary battery.

### 2. Description of the Related Art

Recently, demand for secondary batteries in which both the positive and negative electrode terminals are arranged on one side of the secondary battery is increasing. This type of secondary battery has the advantage of a simple electrical connection structure with the outside.

In the aforementioned type of cylindrical secondary battery, an electrode assembly is accommodated inside a cylindrical can. The can is electrically connected to a negative electrode of the electrode assembly through a negative electrode current collector plate. A positive electrode terminal is provided at the top end of the can. The positive electrode terminal is electrically connected to a positive electrode of the electrode assembly through a positive electrode current collector plate. Here, the positive electrode terminal is insulated from the can by an insulator.

However, if there is a gap between the positive electrode terminal and the insulator, a problem may occur in which the secondary battery is not completely sealed. Accordingly, electrolyte leakage may occur. In addition, the positive electrode terminal may be rotated by an external force. Therefore, there exists a need for a structure for improving the sealing force of a positive electrode terminal area and preventing or substantially preventing rotation of the positive electrode terminal.

The above information disclosed in this Background section is provided for enhancement of understanding of the background of the invention and, therefore, it may contain information that does not constitute prior art.

### SUMMARY

According to an aspect of embodiments of the present disclosure, a cylindrical secondary battery having improved safety is provided.

According to one or more embodiments of the present disclosure, a cylindrical secondary battery includes: an electrode assembly; a cylindrical can accommodating the electrode assembly and having a terminal hole at a first end; and a terminal portion coupled to the first end of the can and electrically connected to the electrode assembly, and the can further includes a coupling groove and a coupling protrusion adjacent to the terminal hole on a portion or plate surface through which the terminal hole is formed or passes.

A depth of the coupling groove may be smaller than a thickness of the first end of the can where the coupling groove is formed.

The depth of the coupling groove may be 10 to 30% smaller than the thickness of the first end of the can where the coupling groove is formed.

The coupling protrusion may face an inside of the can.

The coupling protrusion may protrude to a height equal to or lower than an inner surface of the first end of the can where the coupling groove is formed.

The coupling protrusion may be located on a cut surface side of the terminal hole.

The coupling protrusion may face an outside of the can.

The coupling groove may face the outside of the can.

The terminal portion may include a rivet terminal electrically connected to the electrode assembly, and an insulator (or at least one insulator) between the rivet terminal and the can to insulate the rivet terminal and the can from each other.

A diameter of the coupling groove may be equal to or smaller than a diameter of the insulator.

The insulator may be arranged at a position corresponding to a position of the coupling groove, and may include a coupling portion protruding so as to be shaped to correspond to the coupling groove.

According to one or more embodiments of the present disclosure, a cylindrical secondary battery includes: a can having an upper portion through which a terminal hole is formed or passes, and a cylindrical side portion extending downward from the upper portion; an electrode assembly including a first electrode plate, a second electrode plate, and a separator between the first electrode plate and the second electrode plate, the electrode assembly being wound in a cylindrical shape; a terminal portion including a rivet terminal inserted in the terminal hole and electrically connected to the first electrode plate, and at least one insulator between the rivet terminal and the can to insulate the rivet terminal and the can from each other, wherein the can further includes a coupling groove and a coupling protrusion adjacent to the terminal hole. The upper portion may be a circular surface portion.

The coupling groove may be concavely formed from a surface of the upper portion, and a depth of the coupling groove may be smaller than a thickness of the upper surface portion.

The depth of the coupling groove may be 10 to 30% smaller than the thickness of the upper portion.

The coupling protrusion may face an inside of the can.

The coupling protrusion may protrude to a height equal to or lower than an inner surface of the upper portion.

The coupling protrusion may be located on a cut surface side of the terminal hole.

The coupling protrusion may face an outside of the can.

The coupling groove may face the outside of the can.

The insulator may include a first portion (e.g., a circular first portion) located outside the upper surface portion, a second portion (e.g., a circular second portion) located inside the upper surface portion, and a third portion connecting the first portion and the second portion.

A diameter of the coupling groove may be equal to or smaller than a diameter of the first portion or the second portion.

The insulator may be arranged at a position corresponding to a position of the coupling groove, and may include a coupling portion protruding in a shape corresponding to a shape of the coupling groove.

The secondary battery may further include: a first electrode current collector plate between the rivet terminal and the electrode assembly and electrically connected to the first electrode plate; and a second electrode current collector plate adjacent to an end of the side portion and electrically connected to the second electrode plate and the side portion.

The secondary battery may further include a cap assembly coupled to the side portion and insulated from the side portion.

The side portion may include: a beading part concavely formed at an upper portion of the cap assembly; and a crimping part formed by inwardly bending a lower end of the side portion, and the cap assembly may be arranged between the beading part and the crimping part.

The cap assembly may include a cap plate to seal the side portion, and a gasket between the cap plate and the side portion.

The edge of the second electrode current collector plate may be between the beading part and the gasket and may be in contact with the beading part.

At least some of the above and other features of the invention are set out in the claims.

### BRIEF DESCRIPTION OF DRAWINGS

FIG. 1 is a perspective view of a cylindrical secondary battery according to an embodiment of the present disclosure.
FIG. 2 is a cross-sectional view of the cylindrical secondary battery according to FIG. 1.
FIG. 3 is an enlarged cross-sectional view of a portion of a can of the cylindrical secondary battery according to FIG. 1.
FIG. 4 is a cross-sectional view showing the portion of the can according to FIG. 3 and an insulator.
FIGS. 5 to 7 are cross-sectional views showing a portion of a can and an insulator according to some embodiments of the present disclosure.

### DETAILED DESCRIPTION

Examples of the present disclosure are provided to more completely explain the present disclosure to those skilled in the art, although the following examples may be modified in various other forms. The present disclosure, however, may be embodied in many different forms and should not be construed as being limited to the example embodiments set forth herein. Rather, these example embodiments are provided so that this disclosure will be thorough and complete and will convey aspects and features of the present disclosure to those skilled in the art.

In addition, in the accompanying drawings, sizes or thicknesses of various components may be exaggerated for brevity and clarity. Like numbers refer to like elements throughout. As used herein, the term "and/or" includes any and all combinations of one or more of the associated listed items. In addition, it is to be understood that when an element A is referred to as being "connected to" an element B, the element A may be directly connected to the element B or one or more intervening elements C may be present therebetween such that the element A and the element B are indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections are not to be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s), referring to the figures. It is to be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" may encompass both an orientation of above and below.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

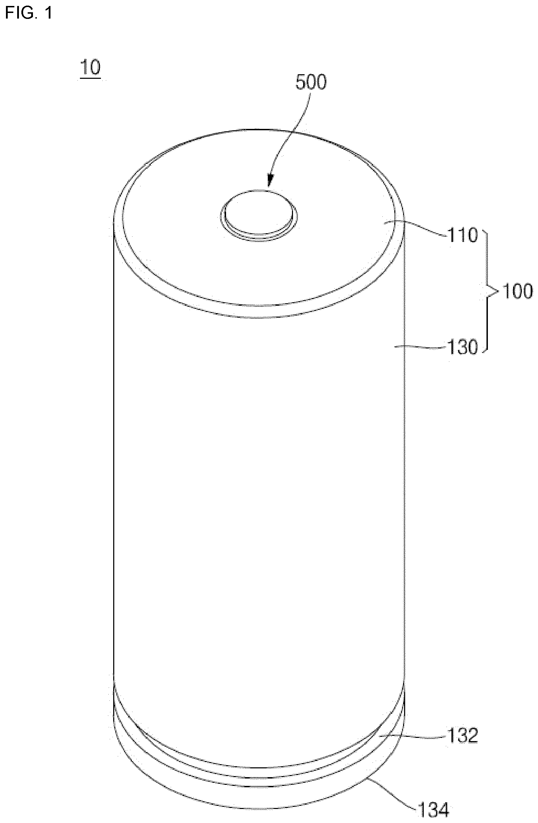

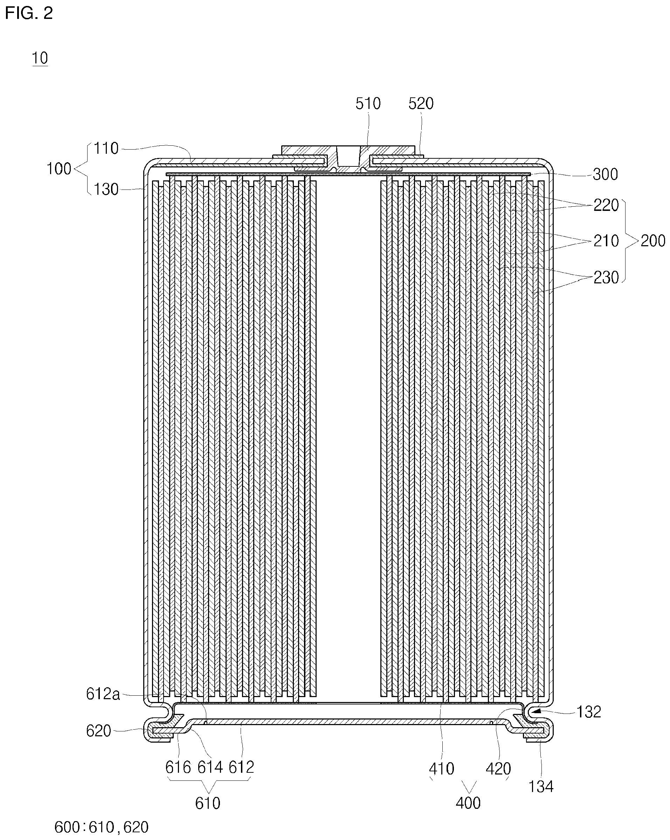

Herein, a cylindrical secondary battery according to an embodiment of the present invention will be described in further detail with reference to the accompanying drawings (for convenience, on the basis of FIGS. 1 and 2, the following description will be provided by defining the upper part as the upper direction and the lower part as the lower direction).

FIG. 1 is a perspective view of a cylindrical secondary battery according to an embodiment of the present disclosure; and FIG. 2 is a cross-sectional view of the cylindrical secondary battery according to FIG. 1.

As shown in FIGS. 1 and 2, a cylindrical secondary battery 10 according to an embodiment of the present disclosure may include a cylindrical can 100, an electrode assembly 200 accommodated inside the can 100, a first electrode current collector plate 300, a second electrode current collector plate 400, a terminal portion 500 provided at a first side of the can 100, and a cap assembly 600 provided at a second side of the can 100.

As shown in FIGS. 1 and 2, the can 100 may include a circular upper surface portion 110 and a cylindrical side portion 130 extending downward from the upper surface portion 110. Since a lower portion of the side portion 130 is open, the can 100 has a cylindrical shape in which a lower end is open.

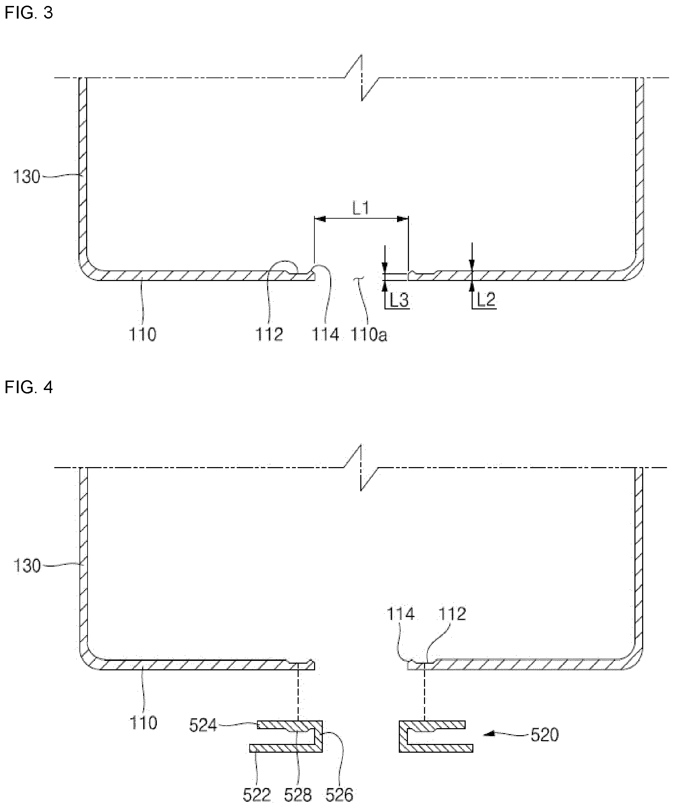

A terminal hole 110a may be formed through a center of the upper surface portion 110 as shown, for example, in FIG. 3. A portion of the terminal portion 500 may be exposed to an outside of the secondary battery 10 through the terminal hole 110a. A coupling groove and a coupling protrusion for improving a coupling strength with respect to the terminal portion 500 may be formed around the terminal hole 110a (which will be described later).

In the side portion 130, an upper end thereof is connected to the upper surface portion 110 to be integrally formed therewith. A lower end of the side portion 130 is open, and a cap assembly 600 is provided at the open end. A beading part 132 may be formed adjacent to the lower end of the side portion 130. The beading part 132 may be concavely formed inward from the side portion 130. An end spaced apart from the beading part 132 may be bent toward an inside of the can 100 to form a crimping part 134. By the beading part 132, separation of the electrode assembly 200 may be prevented or substantially prevented. The cap assembly 600 may be disposed between the beading part 132 and the crimping part 134. The crimping part 134 may fix the cap assembly 600 to seal the can 100.

The can 100 having the above-described structure may be made of steel, a steel alloy, aluminum, an aluminum alloy, or equivalents thereof, but embodiments of the present disclosure are not limited thereto. Inside the can 100, the electrode assembly 200, the first electrode current collector plate 300, and the second electrode current collector plate 400 are accommodated together with an electrolyte.

As shown in FIG. 2, the electrode assembly 200 may have a first electrode plate 210, a second electrode plate 220, and a separator 230 interposed therebetween wound in a cylindrical shape. In an embodiment, the first electrode plate 210 may be a positive electrode plate, and the second electrode plate 220 may be a negative electrode plate. However, it is also possible to be configured in the opposite way.

In the first electrode plate 210, a positive electrode active material layer may be formed on at least one surface of an aluminum (Al) foil by coating, etc. For example, the positive electrode active material layer may be a transition metal oxide (e.g., LiCoO₂, LiNiO₂, LiMn₂O₄, etc.). The first electrode plate 210 may include a first electrode uncoated portion in which the positive electrode active material layer is not formed. In an embodiment, a plurality of first electrode substrate tabs may be formed by cutting the first electrode uncoated portion into a certain shape by notching, etc. In an embodiment, the first electrode substrate tab may be disposed to face the upper surface portion 110 of the can 100. In addition, the first electrode substrate tab protrudes upward from the separator 230 and may be electrically connected to the first electrode current collector plate 300.

In the second electrode plate 220, a negative electrode active material layer may be formed by coating at least one surface of a copper (Cu) or nickel (Ni) foil. By way of example, the negative electrode active material layer may be graphite, carbon, etc. The second electrode plate 220 may include a second electrode uncoated portion on which the negative electrode active material layer is not formed. In an embodiment, a plurality of second electrode substrate tabs may be formed by cutting the second electrode uncoated portion into a certain shape by notching, etc. In an embodiment, the second electrode substrate tab may be disposed to face a lower portion of the can 100. In addition, the second electrode substrate tab may protrude downward from the separator 230 and may be electrically connected to the second electrode current collector plate 400. A portion of the second electrode substrate tab may be welded and electrically connected to the beading part 132 of the can 100.

The separator 230 may be polyethylene (PE) or polypropylene (PP), but is not limited thereto. The separator 230 may prevent or substantially prevent an electrical short circuit between the first electrode plate 210 and the second electrode plate 220 and allow (e.g., only allow) movement of lithium ions.

The electrode assembly 200 having the above-described structure is electrically connected to the first electrode current collector plate 300 and the second electrode current collector plate 400 to be electrically connected to the terminal portion 500 and the can 100, respectively.

As shown in FIG. 2, the first electrode current collector plate 300 has a disk shape and may be made of a same material as the first electrode plate 210. For example, the first electrode current collector plate 300 may be made of aluminum or an aluminum alloy. A diameter of the first electrode current collector plate 300 may be smaller than a diameter of the can 100, such that the first electrode current collector plate 300 may be prevented or substantially prevented from being electrically connected to the can 100. The first electrode current collector plate 300 may be welded in a state in which a lower surface thereof is in contact with a first electrode substrate tab of the first electrode plate 210. Accordingly, the first electrode current collector plate 300 and the first electrode plate 210 may be electrically connected. In addition, an upper surface of the first electrode current collector plate 300 may be welded to a rivet terminal 510 of the terminal portion 500, which will be described later. Accordingly, the first electrode current collector plate 300 and the rivet terminal 510 may be electrically connected. Therefore, the first electrode plate 210 and the rivet terminal 510 may be electrically connected by the first electrode current collector plate 300. That is, the first electrode current collector plate 300 becomes a path for current flow between the first electrode plate 210 and the rivet terminal 510.

As shown in FIG. 2, the second electrode current collector plate 400 may include a disk-shaped plate surface portion 410 and a contact portion 420 extending from the plate surface portion 410. An upper surface of the plate surface portion 410 may be welded in a state of being in contact with a second electrode substrate tab of the second electrode plate 220. Accordingly, the second electrode current collector plate 400 and the second electrode plate 220 may be electrically connected. In an embodiment, the second electrode current collector plate 400 may be made of a same material as the second electrode plate 220. For example, the second electrode current collector plate 400 may be made of copper. In an embodiment, the contact portion 420 may extend downward from an edge of the plate surface portion 410. The contact portion 420 may be in close contact with an inner surface of the beading part 132. In an embodiment, the contact portion 420 may have a curve corresponding to a curve of the beading part 132. For example, the contact portion 420 may be welded to the beading part 132 to be electrically connected thereto. However, the second electrode current collector plate 400 is not electrically connected to the cap assembly 600.

As shown in FIGS. 1 and 2, the terminal portion 500 may include a rivet terminal 510 and at least one insulator 520 for insulating the rivet terminal 510.

The rivet terminal 510 is inserted into the terminal hole 110a formed in the upper surface portion 110 of the can 100. The rivet terminal 510 is electrically connected to the first electrode plate 210 through the first electrode current collector plate 300. The rivet terminal 510 is a terminal coupled to the upper surface portion 110 of the can 100 by a riveting method. The rivet terminal 510 may be inserted into the terminal hole 110a from the outside of the can 100 toward the inside. Here, an end of the rivet terminal 510 is disposed outside the can 100, and another end is disposed inside the can 100. When the rivet terminal 510 is coupled, at least one insulator 520 is inserted between the rivet terminal 510 and the upper surface portion 110 of the can 100 to insulate the can 100 and the rivet terminal 510 from each other. In a state in which the rivet terminal 510 is inserted in the terminal hole 110a, an inner end of the rivet terminal 510 is compressed and deformed through processing such as pressing or spinning. Accordingly, the rivet terminal 510 may be in close contact with the upper surface portion 110 of the can 100.

The insulator 520 may be made of an insulating material. The insulator 520 may have a cross-sectional shape of approximately an "H" laid down, or on its side. The insulator 520 may be used without limitation as long as it is made of an insulating material that does not dissolve in an electrolyte. In addition, the insulator 520 may have appropriate elasticity for close coupling with the upper surface portion 110 of the can 100 and the rivet terminal 510 through pressing. A further detailed structure of the insulator 520 will be described later.

As shown in FIG. 2, the cap assembly 600 may include a cap plate 610 for sealing the can 100 and a gasket 620 insulating the can 100 and the cap plate 610 from each other.

In an embodiment, the cap plate 610 may include a disk-shaped plane portion 612, an inclined surface 614 connected to the plane portion 612, and an extending surface 616 connected to the inclined surface 614. The plane portion 612 may be arranged approximately parallel to the second electrode current collector plate 400. The inclined surface 614 may extend in a downward slope from an edge of the plane portion 612. The extending surface 616 may extend from an edge of the inclined surface 614 and may be parallel to the plane portion 612. The extending surface 616 may be surrounded by the gasket 620 and arranged between the beading part 132 and the crimping part 134. In an embodiment, a notch 612a may be formed on the plane portion 612. The notch 612a may be broken when a pressure inside the secondary battery 10 is greater than a certain pressure. An internal gas of the secondary battery 10 may be discharged when the notch 612a is broken. That is, the notch 612a functions as a vent.

The gasket 620 is disposed between a lower part of the beading part 132 and the crimping part 134 and may cover the extending surface 616 of the cap plate 610. The gasket 620 may cover part or all of the extending surface 616. A side where the gasket 620 and the extending surface 616 are in contact with each other may be defined as the inside, and a side where the gasket 620 is in contact with the beading part 132 may be defined as the outside. Here, a portion of the contact portion 420 of the second electrode current collector plate 400 may be inserted between an outer upper portion of the gasket 620 and the beading part 132. Therefore, the extending portion 420 of the second electrode current collector plate 400 and the extending surface 616 of the cap plate 610 do not contact each other due to the gasket 620. That is, the gasket 620 may insulate the cap plate 610 and the can 100 from each other, and may insulate the cap plate 610 and the second electrode current collector plate 400 from each other.

By the above-described structure, the rivet terminal 510 has a positive polarity, and the can 100 has a negative polarity.

In the secondary battery according to the above-described embodiment of the present disclosure, a structure for improving the sealing force and coupling force between the can and the rivet terminal will be described in further detail.

FIG. 3 is an enlarged cross-sectional view of a portion of a can of the cylindrical secondary battery according to FIG. 1; and FIG. 4 is a cross-sectional view showing the portion of the can according to FIG. 3 and an insulator.

As shown in FIGS. 3 and 4, a coupling groove 112 and a coupling protrusion 114 may be provided on an inner surface adjacent to the terminal hole 110a formed in the center of the upper surface portion 110 of the can 100.

In an embodiment, the coupling groove 112 may be formed by forging. The coupling groove 112 may be shaped as a circular ring having a width (e.g., a predetermined width) on the basis of the center of the upper surface portion 110 of the can 100. A diameter of the terminal hole 110a may be defined as L1. Here, an outer diameter of the coupling groove 112 may be formed larger than the diameter of the terminal hole 110a. The outer diameter of the coupling groove 112 refers to a diameter on the basis of the outer edge of the coupling groove 112 in a direction away from the center of the upper surface portion 110. A length obtained by subtracting the diameter L1 of the terminal hole 110a from the outer diameter of the coupling groove 112 is defined as the width of the coupling groove 112. In other words, the width of the coupling groove 112 may be understood as the diametric length of the upper surface portion 110 with reference to FIG. 3. In addition, a depth L3 of the coupling groove 112 may refer to a length (or thickness) of the part of the upper surface portion 110 at which the groove is deepest in a direction of a thickness L2 of the upper surface portion 110. In further detail, referring to FIG. 3, the depth L3 of the coupling groove 112 is the length from the outer surface of the upper surface portion 110 to the inner surface of the coupling groove 112 (i.e. the thickness of the upper surface portion 110 within the coupling groove 112). In an embodiment, the coupling groove 112 is concavely machined in or formed from the inner surface of the upper surface portion 110 by forging. Accordingly, the depth L3 of the coupling groove 112 is formed to be smaller than the thickness L2 of the upper surface portion 110. In an embodiment, for example, the depth L3 of the coupling groove 112 may be 10 to 30% smaller than the thickness L2 of the upper surface portion 110.

When the coupling groove 112 is forged from the upper surface portion 110, the metal is pushed outward and protrudes by an amount of processing. Here, the direction in which the metal is pushed is a direction of a cut surface (cut side) of the terminal hole 110a. In addition, the direction in which the metal is pushed and protrudes is a direction facing the electrode assembly 200. By processing the portion of the coupling groove 112, which is pushed to protrude, a protrusion, in an embodiment, may be formed that has a triangular or generally triangular cross-sectional shape. The thus formed protrusion corresponds to, or is, the coupling protrusion 114. A protruding height of the coupling protrusion 114, for example inward of the inner surface of the coupling groove 112, is equal to or smaller than that of the inner surface of the upper surface portion 110 of the can 100 (i.e. to the other side of the coupling groove 112), so as to prevent or substantially prevent interference with surrounding parts due to the coupling protrusion 114.

The aforementioned coupling groove 112 and coupling protrusion 114 improve sealing force by increasing a coupling force with the insulator 520. Accordingly, leakage of the electrolyte contained within the can 100 may be prevented or substantially prevented. In addition, by the coupling groove 112 and the coupling protrusion 114, a friction force between the insulator 520 and the upper surface portion 110 is increased. Therefore, the insulator 520 may be tightly (e.g., very tightly) coupled to the upper surface portion 110. Accordingly, even if the rivet terminal 510 moves, the insulator 520 does not move. Therefore, to rotate the rivet terminal 510, a very large rotational pressure must be applied. That is, compared to existing terminal structures, the rotational pressure of the rivet terminal 510 may be increased. Therefore, the rivet terminal 510 cannot be rotated by general external shocks or vibrations that occur in the use environment of secondary batteries. Accordingly, a problem of the rivet terminal 510 rotating due to external force may be prevented or substantially prevented.

As shown in FIG. 4, a coupling portion 528 coupled to the coupling groove 112 may be provided on the insulator 520. As shown in FIGS. 2 and 4, the insulator 520 may include a disk-shaped first part (or portion) 522 disposed outside the upper surface portion 110, a disk-shaped second part (or portion) 524 disposed inside the upper surface portion 110, and a cylindrical third part (or portion) 526 connecting the first part 522 and the second part 524. The coupling portion 528 may be formed on the second part 524. In an embodiment, the second part 524 may have a length sufficiently extending outside the coupling groove 112 of the upper surface portion 110. For example, a length of the second part 524 may be 2 to 3 times the length of the coupling groove 112. The first part 522 to the third part 526 may be integrally or separately formed to be coupled to the upper surface portion 110. In an embodiment, description is made on the basis of an example in which the first to third parts 522, 524, 526 are integrally formed. The coupling portion 528 is formed to protrude on an upper surface of the second part 524 on the basis of FIG. 2, and is formed to protrude on a lower surface of the second part 524 on the basis of FIG. 4. The coupling portion 528 is formed to correspond to the position of the coupling groove 112, and the coupling portion 528 has a protrusion shape corresponding to a shape of the coupling groove 112. In an embodiment, when viewed in a plan view, the coupling groove 112 is a circular groove, and, thus, the coupling portion 528 may be a circular ring-shaped protrusion. Although not shown in the drawings, the insulator 520 may additionally be provided with a groove corresponding to the coupling protrusion 114. However, in an embodiment, the insulator 520 has elasticity and may be in close contact with the coupling protrusion 114, and the groove corresponding to the coupling protrusion 114 is not provided.

In the above-described embodiments, an embodiment in which the second part 524 of the insulator 520 has a length sufficient to cover the coupling groove 112 has been described. In addition, an embodiment in which a coupling groove 112 and a coupling protrusion 114 are provided inside the upper surface portion 110 of the can 100 has been described. Herein, some embodiments having a different structure from the above-described embodiments will be described.

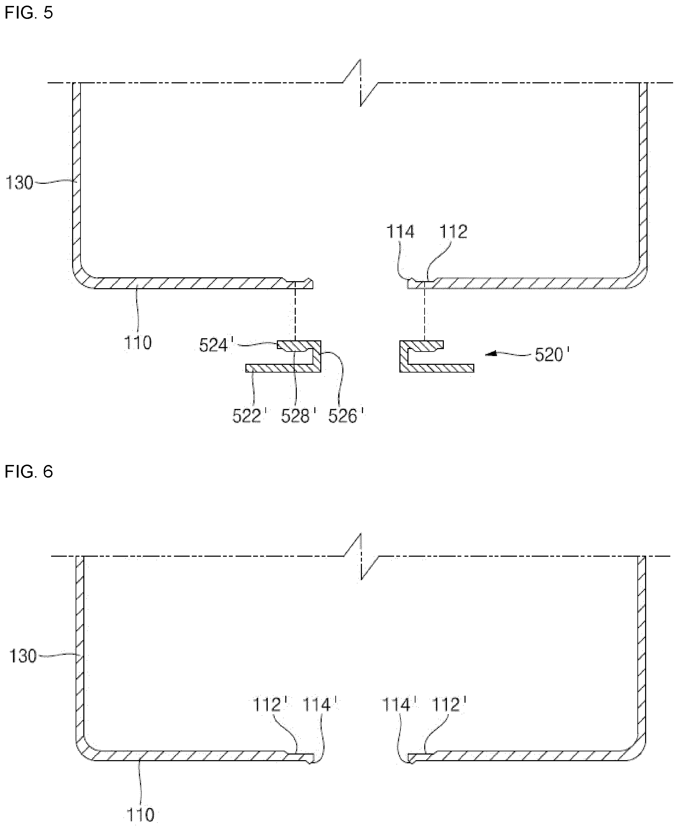

FIGS. 5 to 7 are cross-sectional views showing a portion of a can and an insulator according to some embodiments of the present disclosure.

As shown in FIG. 5, a coupling groove 112 and a coupling protrusion 114 of an upper surface portion 110 may be the same as those in the embodiment shown in FIG. 4. A first part 522', a third part 526', and a coupling portion 528' of an insulator 520' may be the same as those of the embodiment shown in FIG. 4. However, a length of a second part 524' may be shorter than that of the second part 524 of the insulator 520 of FIG. 4. Even though the length of the second part 524' is shorter than that of the second part 524 of the embodiment of FIG. 4, the second part 524' may be formed to have a length sufficiently covering the coupling groove 112. Therefore, like in the embodiment shown in FIG. 4, the sealing force of the terminal portion 500 can be maintained.

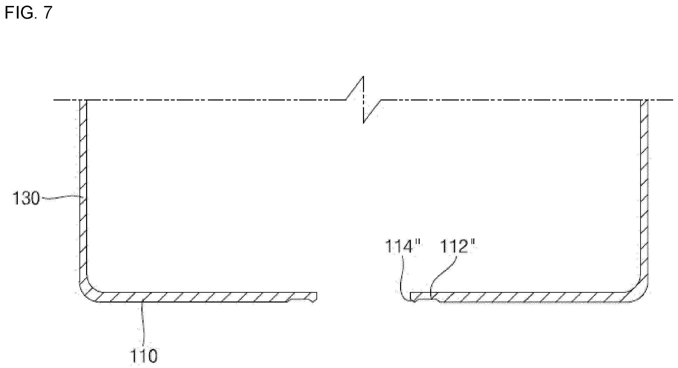

In an embodiment, as shown in FIG. 6, a coupling groove 112' may be provided on the inside of the upper surface portion 110 of the can 100, and a coupling protrusion 114' may be provided at an outside, or outer surface, of the upper surface portion 110. In another embodiment, as shown in FIG. 7, both a coupling groove 112" and a coupling protrusion 114" may be provided at an outside, or outer surface, of the upper surface portion 110. Although not shown in the drawing, a position of a coupling portion of a second portion of an insulator may also be varied in to correspond to the position of the coupling groove 112', 112".

As described above, even if the positions of the coupling groove and coupling protrusion are changed, the sealing force is maintained to be the same as that of the embodiment shown in FIG. 4, and the rotation of a rivet terminal may be prevented or substantially prevented.

In the cylindrical secondary battery according to one or more embodiments of the present disclosure, the sealing force of the cylindrical secondary battery may be increased by providing a forged groove and a protrusion in the can that is a region to which a rivet terminal is coupled. Accordingly, electrolyte leakage inside the secondary battery may be prevented or substantially prevented. In addition, rotation of the rivet terminal may be prevented or substantially prevented by increasing the rotational pressure of the rivet terminal.

While some embodiments for carrying out the present disclosure have been described herein, the present disclosure is not limited to these embodiments, and it will be understood by a person skilled in the art that various changes in form and details may be made therein without departing from the scope of the present disclosure as set forth by the following claims.

## Claims

1. A cylindrical secondary battery comprising:
an electrode assembly;
a cylindrical can accommodating the electrode assembly and having a terminal hole at a first end; and
a terminal portion coupled to the first end of the can and electrically connected to the electrode assembly,
wherein the can further comprises a coupling groove and a coupling protrusion adjacent to the terminal hole on a portion through which the terminal hole passes.

2. The cylindrical secondary battery as claimed in claim 1, wherein a depth of the coupling groove is smaller than a thickness of the first end of the can where the coupling groove is formed.

3. The cylindrical secondary battery as claimed in claim 1 or claim 2,
wherein the coupling protrusion faces an inside of the can, and optionally wherein the coupling protrusion protrudes to a height equal to or lower than an inner surface of the first end of the can where the coupling groove is formed.

4. The cylindrical secondary battery as claimed in any one of the preceding claims, wherein the terminal portion comprises a rivet terminal electrically connected to the electrode assembly, and an insulator between the rivet terminal and the can to insulate the rivet terminal and the can from each other, and optionally wherein a diameter of the coupling groove is equal to or smaller than a diameter of the insulator.

5. A cylindrical secondary battery comprising:
a can having an upper portion through which a terminal hole passes, and a cylindrical side portion extending downward from the upper portion;
an electrode assembly comprising a first electrode plate, a second electrode plate, and a separator between the first electrode plate and the second electrode plate, the electrode assembly being wound in a cylindrical shape; and
a terminal portion comprising a rivet terminal inserted in the terminal hole and electrically connected to the first electrode plate, and an insulator (or at least one insulator) between the rivet terminal and the can to insulate the rivet terminal and the can from each other,
wherein the can further comprises a coupling groove and a coupling protrusion adjacent to the terminal hole.

6. The cylindrical secondary battery as claimed in claim 5, wherein the coupling groove is concavely formed from a surface of the upper portion, and a depth of the coupling groove is smaller than a thickness of the upper portion, and optionally wherein the depth of the coupling groove is 10 to 30% smaller than the thickness of the upper portion.

7. The cylindrical secondary battery as claimed in claim 5 or claim 6, wherein the coupling protrusion protrudes to a height equal to or lower than an inner surface of the upper portion.

8. The cylindrical secondary battery as claimed in any one of claims 5 to 7, wherein the insulator comprises a first portion arranged outside the upper portion, a second portion arranged inside the upper portion, and a third portion connecting the first portion and the second portion, and optionally wherein a diameter of the coupling groove is equal to or smaller than a diameter of the first portion or the second portion.

9. The cylindrical secondary battery as claimed in any one of claims 5 to 8, further comprising:
a first electrode current collector plate between the rivet terminal and the electrode assembly and electrically connected to the first electrode plate; and
a second electrode current collector plate adjacent to an end of the side portion and electrically connected to the second electrode plate and the side portion.

10. The cylindrical secondary battery as claimed in any one of claims 5 to 9, further comprising a cap assembly coupled to the side portion and insulated from the side portion, and optionally wherein the side portion comprises:
a beading part concavely arranged at an upper portion of the cap assembly; and
a crimping part formed by inwardly bending a lower end of the side portion, the cap assembly being arranged between the beading part and the crimping part, and optionally the cap assembly comprises a cap plate to seal the side portion, and a gasket between the cap plate and the side portion, and optionally an edge of the second electrode current collector plate is between the beading part and the gasket and is in contact with the beading part.

11. The cylindrical secondary battery as claimed in any one of the preceding claims, wherein the coupling protrusion faces an inside of the can.

12. The cylindrical secondary battery as claimed in any one of the preceding claims, wherein the coupling protrusion is located on a cut surface side of the terminal hole.

13. The cylindrical secondary battery as claimed in any one of the preceding claims, wherein the coupling protrusion faces an outside of the can.

14. The cylindrical secondary battery as claimed in claim 13, wherein the coupling groove faces the outside of the can.

15. The cylindrical secondary battery as claimed in any one of the preceding claims, wherein the insulator is arranged at a position corresponding to a position of the coupling groove, and comprises a coupling portion protruding in a shape corresponding to a shape of the coupling groove.
